# EUROPÄISCHE PATENTSCHRIFT

(11) **EP 0 924 975 B1**
(45) Veröffentlichungstag und Bekanntmachung des Hinweises auf die Patenterteilung: **15.11.2000**
(21) Anmeldenummer: 97937418.8
(22) Anmeldetag: 30.07.1997
(51) Int. Cl.: A01B 45/02

(54) **BEARBEITUNGSGERÄT FÜR DIE TIEFENLOCKERUNG VON BÖDEN**
SUBSOILING MACHINE
OUTIL POUR AMEUBLIR LE SOL EN PROFONDEUR

(30) Priorität: 31.07.1996 DE 19630961
(43) Veröffentlichungstag der Anmeldung: 30.06.1999
(60) Teilanmeldung: 00106255.3
(73) Patentinhaber: Wiedenmann GmbH, 89192 Rammingen (DE)
(72) Erfinder: WIEDENMANN, Georg, D-89192 Rammingen (DE)
(74) Vertreter: Flügel, Otto, Dipl.-Ing.
(86) Internationale Anmeldenummer: DE9701616
(87) Internationale Veröffentlichungsnummer: WO9805191

(56) Entgegenhaltungen:
- EP-A- 0 037 595
- WO-A-89/12381
- WO-A-91/07076
- DE-A- 4 323 315
- US-A- 3 204 703
- US-A- 4 632 189
- US-A- 5 570 746

## Beschreibung

Bearbeitungsgeräte für die Tiefenlockerung von Böden sind in unterschiedlicher Ausführung bekannt, so beispielsweise dergestalt, daß die Stechwerkzeuge in einer vertikalen, in Fahrtrichtung verlaufenden Ebene verschwenkbar an einem steuerbaren Werkzeugträger gelagert und unter der Kraft einer Feder gegen Anlage an einem Anschlag beaufschlagt sind, der sicherstellt, daß das Stechwerkzeug vor Eindringen in den Boden eine bestimmte Ausrichtung zu diesem aufweist, die insbesondere mit der Druckbelastungsrichtung bei Eindringen in den Boden zumindest annähernd übereinstimmt. Das Einstechen der Werkzeuge in den Boden geschieht bei in Fahrtrichtung bewegtem Gerät, durch welche Fahrbewegung das in den Boden eingedrungene Werkzeug in gewisser Weise verschwenkt, jedoch nicht so weit, daß bei Herausziehen des Werkzeuges eine Aufbrechbewegung der Bodenoberfläche erfolgt. Die geringe Versetzbewegung im Boden aus der durch den Anschlag vorgegebenen Ausrichtlage herausführt das Werkzeug gegen die Kraft der vorerwähnten Feder aus. Nach Verlassen des Bodens wird das Werkzeug unter der Kraft der Feder wieder gegen den Anschlag und damit in die Ausgangslage zurück verschwenkt. Die Betätigung des Werkzeuges bzw. von Gruppen solcher Werkzeuge geschieht in an sich bekannter Weise mit Hilfe eines Kurbeltriebes, der im Zuge der Fahrbewegung des Gerätes entsprechend der gewünschten Einstechdichte angetrieben wird. Ein solches Gerät ist beispielsweise aus der U.S. 3,204,703 bekannt.

Die EP 0452449 B1 zeigt eine Parallelausrichtung des Werkzeuges über einen gesamten Bewegungszyklus hinweg, wodurch es möglich ist, die Einstechtiefe der Werkzeuge allein dadurch einzustellen, daß man den Geräterahmen gegenüber einer bodenseitigen Abstützung - Bodenwalze - höhenverstellbar gestaltet. Durch ein Verstellen des Anschlages ist es unabhängig davon möglich, die Ausrichtung der Werkzeuge gegenüber der Ebene des zu bearbeitenden Bodens zu verändern, wodurch man die Art der Auflockerung im Boden beeinflussen kann.

Der Erfindung liegt die Aufgabe zugrunde, ein Gerät der in Rede stehenden Art zu schaffen, das bei einfacher und robuster, wartungsarmer Ausgestaltung eine bequem zugängliche Einstellbarkeit des Einstechwinkels, insbesondere gepaart mit einer Einstellung der Einstechtiefe der Werkzeuge ermöglicht.

Diese Aufgabe wird gelöst durch ein fahrbares oder an ein Fahrzeug anzuschließendes Bearbeitungsgerät für die Tiefenlockerung von Böden, beispielsweise unterhalb einer Grasnarbe, mit einer im wesentlichen senkrecht zur Fahrtrichtung verlaufend angeordneten Aufeinanderfolge von Stechwerkzeugen bzw. Werkzeughalter, deren jeder in einem der Endbereiche eines Tragarmes angelenkt ist, der anderen Endes an einem Geräterahmen verschwenkbar gelagert ist, an dem eine in einer vertikalen und in Fahrtrichtung verlaufenden Ebene wirksame Antriebsstange, insbesondere eines Kurbeltriebes, angreift und an dem ein koaxial zur Anlenkachse des Werkzeughalters verschwenkbarer zweiarmiger Einstellhebel gehalten ist, an dessen nach unten abragendem Arm ein auf einen unterhalb der Gelenkachse befindlichen Bereich des Werkzeughalters ausgerichteten Anschlag aufweist und an dessen nach oben abragendem Arm eine Verstelleinrichtung angreift, mit der die Winkelstellung des Einstellhebels zum Tragarm und damit über den Anschlag der Einstechwinkel des Stechwerkzeuges gegenüber dem Boden bestimmbar ist, wobei der Werkzeughalter mittels einer Federeinrichtung in Anlage an den Anschlag beaufschlagt ist und diesen bei Einstich in den Boden durch den dadurch gegen Fahrtrichtung auftretenden Widerstand gegen die Federkraft verläßt.

Durch die Anordnung des Anschlages einerseits und des Angriffes einer Verstelleinrichtung andererseits an den Armen eines zweiarmigen, um die Verschwenklagerachse des Werkzeughalters koaxial verschwenkbaren Einstellhebels wird es möglich, nicht nur den Anschlag in jeder Verschwenkstellung des Einstellhebels exakt auf den anschlagenden Bereich des Werkzeughalters auszurichten, sondern die Einstellung geschieht an dem dem Anschlag abgewandten Armbereich des Einstellhebels oberhalb der mit dem Stechwerkzeug gemeinsamen Verschwenkachse in dem dem rahmenfesten Schwenklager abgewandten Endbereich des Tragarmes, so daß der Zugriff zu der Verstelleinrichtung zur Einstellung des Einstechwinkels vom Boden abgewandt oberhalb des Tragarmes und von dessen in Fahrtrichtung gesehen nach rückwärts abragenden Ende her geschehen kann: Die Verstelleinrichtung ist damit von Verschmutzungen durch die Bodenbearbeitung entfernter und zugleich leicht zugänglicher Stelle angeordnet.

In ähnlicher Weise vom zum bearbeitenden Boden beabstandet und unter Berücksichtigung des insgesamt benötigten Raumes ist die Federeinrichtung bevorzugt seitlich des Tragarmes angeordnet, insbesondere in Form zweier paralleler Zugfedern, die vorzugsweise an ein und derselben Seite des Tragarmes angeordnet sind, während die Verstelleinrichtung zumindest mit einem Teil ihrer Bauelemente von oben gesehen an der anderen Seite des vorzugsweise doppelstrebigen Tragarmes verläuft.

Die Verstelleinrichtung kann durch längenveränderliche Elemente, die zwischen einer Angreifstelle im freien Endbereich des nach oben abragenden Armes des zweiarmigen Einstellhebels und einer zumindest im Nahbereich der geräterahmenfesten Verschwenklagerung des Tragarmes angeordnet sind, für jeden Werkzeugträger bzw. jeden zugehörigen Einstellhebel der quer zur Fahrtrichtung angeordneten Vielzahl von Werkzeugträgern insoweit einzeln erfolgen. Solche längenveränderlichen Elemente sind beispielsweise Spannschraubschlösser bekannter Bauart, vom abragenden Ende des Tragarmes zu betätigende Schraubstellglieder und dergleichen.

In besonders bevorzugter Ausführung ist eine vorzugsweise sämtlichen Einstellhebeln gemeinsame Zentralverstellachse vorgesehen, die über verdrehfest an ihr ausgebildete Ausleger über Verbindungsstangen, die starr oder aber auch für Justierzwecke mit längenveränderlichen Elementen ausgebildet sein können, mit den freien Enden der nach oben abragenden Arme der Einstellhebel angeschlossen sind. Diese Zentralverstellachse kann mittels eines verdrehfesten Handhebels, vorzugsweise stufenlos, in verschiedene Verschwenkstellungen gegenüber dem Geräterahmen eingestellt und in der jeweiligen Stellung festgelegt werden, wodurch zumindest eine Gruppe, vorzugsweise sämtliche Einstellhebel in gleicher Weise gegenüber ihren Tragarmen in bestimmte Winkelstellungen verschwenkt werden, so daß sich durch entsprechende Lageänderung der Anschläge an den unteren Armen der Einstellhebel der Einstechwinkel der Werkzeuge der zugehörigen Werkzeughalter zugleich und durch die gemeinsame Zentralverstellachse durch eine Verschwenkbewegung einstellen läßt.

In noch weitergehend bevorzugter Ausgestaltung läßt sich die Verstellung des Einstechwinkels der Werkzeuge an die gewählte Einstechtiefe anpassen, so daß - ungeachtet einer Einzeleinstellbarkeit - eine Tiefenverstellung automatisch eine angepaßte Einstechwinkelveränderung mit sich bringt. Dazu kann beispielsweise die Höheneinstellbewegung zwischen dem Geräterahmen und einer abstützenden Bodenwalze durch einen Mitnehmer auf die Zentralverstellachse übertragen werden.

Der im freiendenden Bereich des nach unten abragenden Armes des zweiarmigen Einstellhebels angeordnete Anschlag kann einen elastisch verformbaren stoßabfangenden Körper aufweisen oder bzw. gegebenenfalls zusätzlich einen Stoßdämpfer tragen der als pneumatische, insbesondere hydraulische, Kolben-Zylinder-Einrichtung ausgebildet ist und dessen Kolbenstange, an dem der anschlagende Bereich der Werkzeugträger vorzugsweise angreift, mit der Zylinderinnenwandung durch einen Balg staubdicht abgeschlossen ist. Durch eine Ventileinrichtung im Kolben und/oder in einem Zylinderraumbypass kann sichergestellt werden, daß die Dämpfung und die Rückführbewegung des Kolbens auf den Betrieb des Werkzeuges auch bei schneller Fahrweise abgestimmt sind. In bevorzugter Ausführung läßt sich der Stoßdämpfer, vorzugsweise durch eine Kontermuttereinstellung in dem vom Boden abgewandten Bereich, derart einjustieren, daß der Angriff des betroffenen Dämpfergliedes, vorzugsweise der Kolbenstange, an dem Anlagebereich des rückfedernden Werkzeugträgers angreift, bevor dieser den eigentlichen Anschlag erreicht.

Insbesondere bei Bruch auch nur einer Feder der vorzugsweise doppelfedrigen Federeinrichtung kann der Werkzeugträger dazu neigen, in Gegenanschlagrichtung zu verschwenken. Für diesen Fall ist der Einstellhebel in bevorzugter Ausbildung im nach rückwärts gewandten Bereich seines nach oben abragenden Armes mit einer Rückschlagsperre - einer vorspringenden Nase - ausgestattet, die den Werkzeugträger bei rückwärtigem Ausschlag abfängt.

In weiterhin besonders bevorzugter Ausführung ist dem Anschlag eine Dämpfungseinrichtung zugeordnet, dergestalt, daß sich die Kraft-Weg-Charakteristiken überlagern, insbesondere in Reihenschaltung, vor allem bei Ausstattung des Anschlages mit einem Aufschlagdämpfer, dessen Dämpfungscharakteristik vorzugsweise von derjenigen der Dämpfungseinrichtung abweichend ausgebildet ist. Bevorzugt ist dabei die Dämpfungseinrichtung steifer ausgebildet als die an den Stechwerkzeugen angreifende Federeinrichtung (Zugfedern), so daß eine Verstellung des Einstechwinkels von der Federeinrichtung aufgenommen wird und die Dämpfungseinrichtung sich dabei nicht verformt. Zu diesem Zweck ist die Dämpfungseinrichtung vorzugsweise entsprechend vorgespannt. Dazu befindet sich die Dämpfungseinrichtung bevorzugt im Bereich der Verstelleinrichtung und greift an den nach oben ragenden Arm des Einstellhebels an. Die Dämpfungseinrichtung kann als Druckfeder, insbesondere als Schraubendruckfeder ausgebildet sein, die mit Federsitzen koaxial zum Schaft einer als Verstelleinrichtung ausgebildeten Einstellschraube auf diesem angeordnet ist, und daß der nach oben ragende Arm des Einstellhebels an ein an dem Schaft längsbeweglich gelagerten Gelenkstück angelenkt ist, wobei das Gelenkstück an dem Schaft hinsichtlich seiner Verschiebebewegung gegen die Kraft der Druckfeder gegebenenfalls unter deren Vorspannung mittels einer Festlegeeinrichtung begrenzbar ist.

Die Erfindung wird anhand der in der Zeichnung wiedergegebenen Ausführungsbeispiele nachstehend näher erläutert. Es zeigen:
- Fig. 1: eine schematische Seitenansicht auf eine erste Ausführungsform;
- Fig. 2a,b: Teilseitenansicht und teilgeschnittene Draufsicht auf ein zweites Ausführungsbeispiel;
- Fig. 3a,b: Teilseitenansicht und teilgeschnittene Draufsicht auf ein drittes Ausführungsbeispiel;
- Fig. 4a,b: Teilseitenansicht und teilgeschnittene Draufsicht auf ein viertes Ausführungsbeispiel;
- Fig. 5a,b: Teilseitenansicht und teilgeschnittene Draufsicht auf ein fünftes Ausführungsbeispiel;
- Fig. 6a,b: eine vergrößerte Teilansicht der Seitenansicht der Fig. 5a mit einer Führung des Verstellgliedes gemäß Fig. 2a;
- Fig.7a,b: Teilseitenansicht und teilgeschnittene Draufsicht zur Erläuterung der zentralen Verstellung für die Ausführungen nach den Fig. 1 und 8
- Fig. 8: eine Seitenansicht entsprechend Fig. 1 einer letzten Ausführung.
- Fig. 9: eine Teilseitenansicht eines weiteren Ausführungsbeispieles.

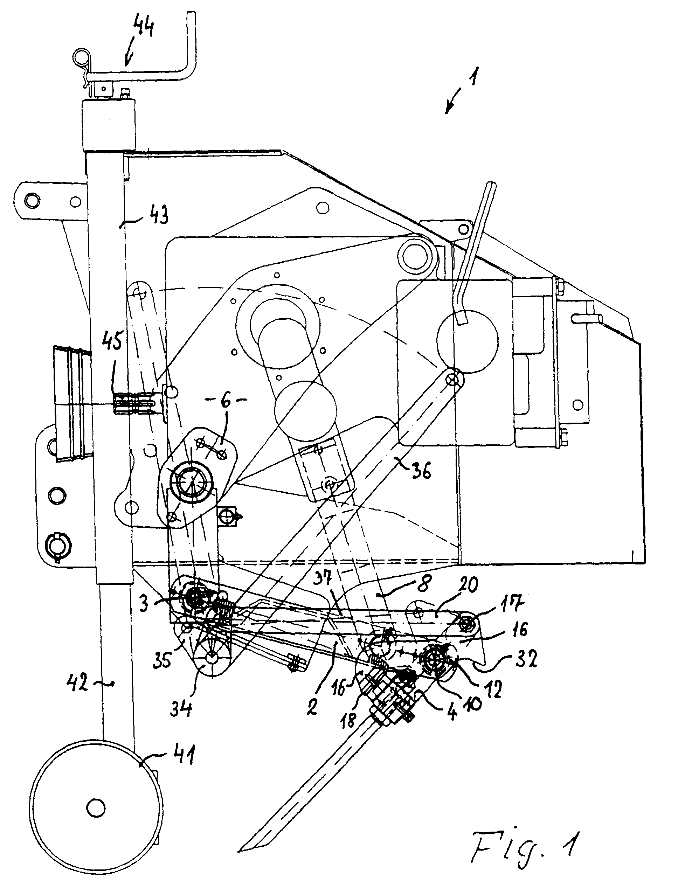

Aus Fig. 1 ist ein insgesamt mit 1 bezeichnetes Bodenbearbeitungsgerät für die Tiefenlockerung ersichtlich, das als Nachlaufgerät für den Anbau an eine Zugmaschine ausgebildet und insgesamt mit 1 bezeichnet ist. Nachfolgend werden nur die funktionswesentlichen und zur Verdeutlichung benötigten Merkmale bzw. Bauteile angesprochen, da Geräte dieser Art von der Gattung her bekannt sind; im übrigen wird auf die insgesamt wiedergegebenen Ausführungsbeispiele in ihrer gezeichneten Form ausdrücklich Bezug genommen.

An dem Geräterahmen 6 des Gerätes 1 ist ein Tragarm 2 an seinem in Fahrtrichtung gesehenen vorderen Ende in einer rahmenfesten Verschwenklagerung 3 gehalten. An dem nach rückwärts abragenden Endbereich des Tragarmes 2 ist ein Einstechwerkzeug in einem Werkzeughalter 4 auswechselbar festgelegt; von diesen Werkzeugen nebst zugeordneten Tragarmen, Einstellhebeln und Kurbeltriebantriebsstangen sind senkrecht zur Fahrtrichtung und parallel zum Boden verlaufend eine Reihe von Werkzeugen bzw. Werkzeugsätzen angeordnet, die rhythmisch - bevorzugt paarweise aufeinanderfolgend - in den Boden eingestoßen und aus diesem wieder ausgehoben werden. Von diesen Wekzeugen bzw. Werkzeugträgern nebst zugehörigen Einrichtungen ist auch in den folgenden Beispielen jeweils nur einer dargestellt.

Der Werkzeughalter 4 ist um eine Anlenkachse 10 im nach rückwärts ragenden, der rahmenfesten Verschwenklagerung 3 abgewandten Endbereich des zugehörigen Tragarmes 2 verschwenkbar gelagert. Koaxial zu dieser Anlenkachse 10 ist an dem Tragarm 2 ein zweiarmiger Einstellhebel 12 drehgelagert, an dessen nach unten abragendem Arm 14 ein Anschlag 18 vorgesehen ist, und zwar in Ausrichtung auf eine Anlagefläche des Werkzeughalters 4, mit der dieser an dem Anschlag 18 aufgrund der koaxialen Verschwenklagerung an dem Tragarm 2 in jeder Winkellage zwischen dem Einstellhebel 12 und dem Tragarm 2 in gleicher Ausrichtung anschlägt, wodurch der Verschleiß in diesem Bereich minimal ist. Im freien Endbereich des nach oben abragenden Armes 16 des Einstellhebels 12 ist eine insgesamt mit 20 bezeichnete Verstelleinrichtung bei 17 angelenkt, deren Ausbildung in verschiedenen Varianten nachstehend noch geschildert wird. Im Nahbereich der Anlenkachse 10 ist eine Antriebsstange 8 eines nur angedeuteten Kurbeltriebes angelenkt, mit welchem der Tragarm in bekannter Weise um die Anlenkung 3 verschwenkend in einem Zyklus bewegt wird, in welchem das Stechwerkzeug in den Boden eingeführt und aus diesem wieder herausgeführt wird, wobei unter Berücksichtigung der Fahrbewegung des nicht gezeigten Zugfahrzeuges nach links in der Zeichenebene das im Boden befindliche Werkzeug um die Anlenkachse 10 von dem Anschlag fortbewegt wird. Bei Ausheben aus dem Boden wird das Werkzeug bzw. der Halter 4 wieder in Anlage an den Anschlag gebracht, und zwar unter Einwirkung einer Federeinrichtung 22, die ebenfalls unterschiedlich ausgebildet sein kann und die sich vornehmlich zwischen einem unterhalb der Anlenkachse 10 an dem Werkzeughalter 4 befindlichem Angriffspunkt einen Endes und einem zumindest im Nahbereich, vorzugsweise in Achsrichtung der Verschwenklagerung 3 des Tragarmes 2, gelegenen Angriffspunkt andererseits erstreckt. Unter bestimmten Bedingungen, insbesondere bei Bruch oder Teilbruch der Zugfedereinrichtung 22, kann der Werkzeugträger nach rückwärts also entgegen der Anlagerichtung an dem Anschlag 18 verschwenken. Zur Begrenzung dieser Verschwenkbewegung ist an dem Einstellhebel 12 als Rückschlagsperre 32 eine Nase ausgebildet, wie dies die Zeichnung erkennen läßt. Zur Einstellung der Einstechtiefe kann der an einem entsprechend beweglichen Dreipunktlenker des Zugfahrzeuges gehaltene Geräterahmen 6 dadurch in seinem Abstand zum Boden eingestellt werden, daß an ihm eine bodenseitige Stützwalze 41 über einen Träger 42 teleskopartig in einem Rohr 43 geführt ist, zwischen welchen beiden Teilen 42 und 43 eine mittels einer Kurbel betätigbare Schraubspindelverbindung 44 besteht. Der nur angedeutete Kurbeltrieb wird über einen eingangsseitig bei 45 angedeuteten Zapfwellenantrieb vom Zugfahrzeug aus in Umdrehung versetzt.

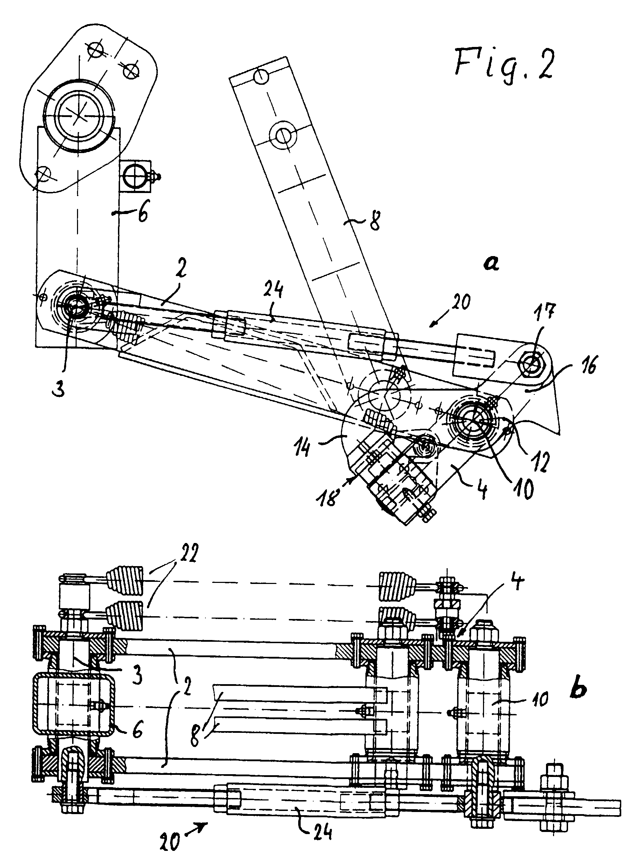

Im Beispiel gemäß Fig. 2 weist die Verstelleinrichtung 20 ein längenverstellbares Element in Form eines Spannschraubschlosses 24 zwischen dem freien Endbereich des nach oben abragenden Armes 16 und der rahmenfesten Verschwenklagerung 3 auf, das aufgrund der Rechts-Links-Gewindegestaltung durch Verdrehen eine Abstandsänderung zwischen der Anlenkstelle 17 am Arm 16 und der Verschwenklagerung 3 bewirkt, so daß sich die Winkellage des Einstellhebels 12 und damit des Anschlages 18 an dessen unteren Arm 14 entsprechend ändert, wodurch der Einstechwinkel des nicht dargestellten, in der Werkzeughalterung 4 befindlichen Stechwerkzeuges in den Boden eingestellt werden kann. Wie aus Fig. b ersichtlich, besteht die Federeinrichtung 22 aus zwei parallel angeordneten und wirkenden Zugfedern, die sich zwischen Angreifpunkten an der Verschwenklagerung 3 und dem Werkzeughalter 4 erstrecken. Beide Federn befinden sich anschließend an einen Seitenbereich des doppelarmigen Tragarmes 2, während auf der anderen Seite des Tragarmes die Verstelleinrichtung 20 verläuft.

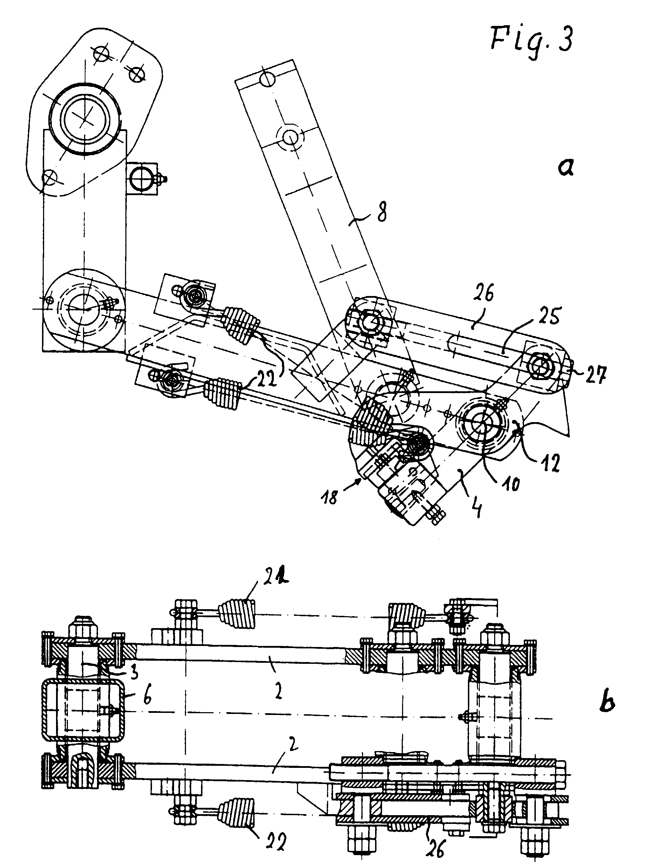

In Fig. 3 weißt die Verstelleinrichtung 20 ein Schraubstellglied 26 auf, bei dem eine Schraube - Schraubkopf 27 - von der rückwärtigen freien Seite des Tragarmes aus bedienbar ist und eine Verstellung im Rahmen des Langloches 25 zwischen Schraubkopfabstützung und Schraubschaftgewindenuß ermöglicht. Die auch hier aus zwei parallel wirksamen Zugfedern bestehende Federeinrichtung 22 verläuft wie aus den Figuren ersichtlich beidseits des doppelstrebigen Tragarms 2.

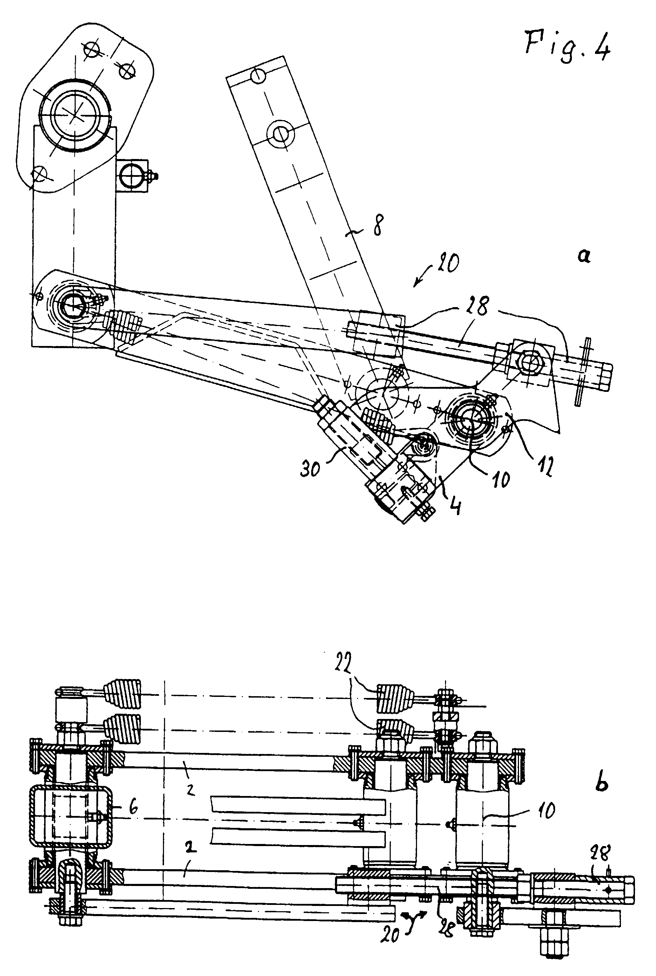

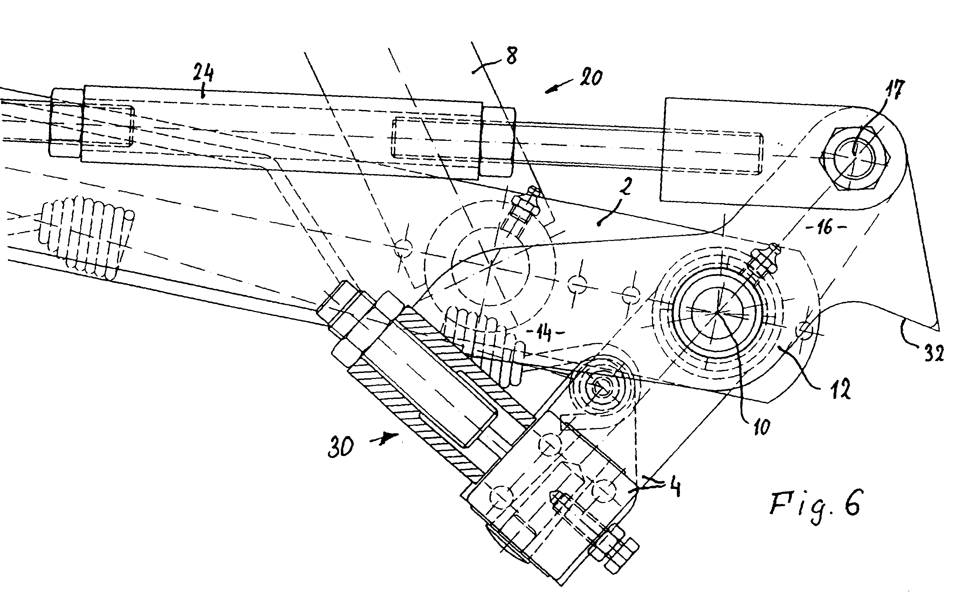

Bei dem Ausführungsbeispiel gemäß Fig. 4 ist als längenverändeliches Stellglied eine gegenüber Fig. 3 abgewandelte, vom Bereich hinter dem rückwärtigen Ende des Tragarmes zugängliche Schraubeinrichtung vorgesehen. Die Anordnung der Doppelfeder 22 und der Verstelleinrichtung beidseitig des Tragarmes 2 ist ähnlich wie in Fig. 2. Der Anschlag 18 ist mit einem Stoßdämpfer 30 versehen, der im Zusammenhang mit Fig. 6 noch näher erläutert wird.

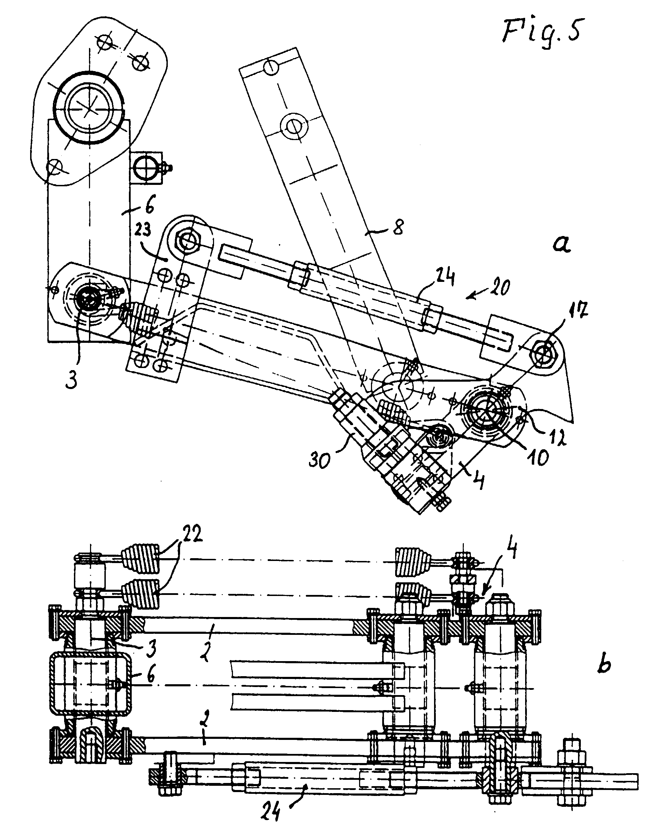

Das Ausführungsbeispiel gemäß Fig. 5 zeigt eine Abwandlung gegenüber demjenigen nach Fig. 2 dahin, daß die geräterahmenseitige Halterung der Verstelleinrichtung 22 auf einen Ausleger 23 am Tragarm 2 verlegt ist. Im übrigen ist auch hier der Anschlag mit einem Stoßdämpfer 30 versehen.

Fig. 6 zeigt eine vergrößerte Teilseitenansicht der koaxialen Anordnung von Werkzeughalter 4 und Einstellhebel 12 mit einem Anschlag 18, der einen insgesamt mit 30 bezeichneten hydraulischen Stoßdämpfer aufweist. Der die Kolbenstange führende Zylinderkörper ist über ein Gewinde in einer Hülse in Längsrichtung der Stange verstellbar und mit einer dem Boden abgewandten Kontermutter festlegbar. Der Zylinderraum ist durch eine Balgmembran zwischen Kolbenstange und Zylinderinnenwandung gegen Schmutzeintritt geschützt. So läßt sich ein vorzugsweise entsprechend gedämpft ausgebildeter Anschlag im nach unten abragenden Armbereich des Einstellhebels 12 gefahrlos und wartungsfrei verwirklichen. Durch die Verstellbarkeit der Gewindeverbindung zwischen der Außenwandung des Zylinders und der Innenwandung der umgebenden Hülse läßt sich bestimmen, um welche Strecke die Kolbenstange über die als Anschlag wirksame, der Anlagefläche des Wrkzeughalters 4 zugewandte Stirnwandung der Hülse hinausragt, um die beabsichtigte Dämpfung zu bewirken. Dämpfungs- und Rückstellverhalten des Stoßdämpfers können durch Bypassventilausbildung angepaßt werden.

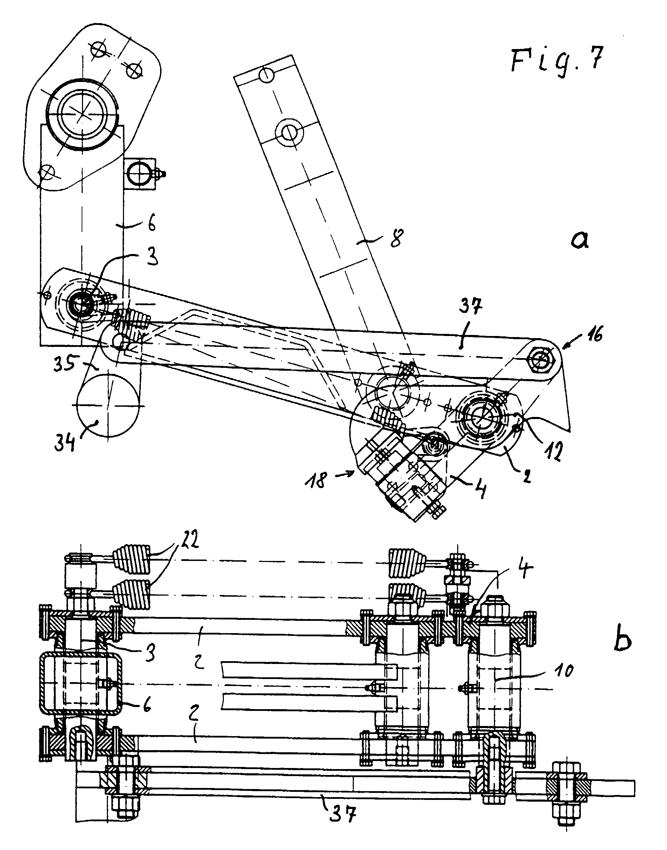

Fig. 7 zeigt in vergrößerter Teildarstellung eine grundsätzliche Ausbildung der Verstelleinrichtung 20 für eine gleichzeitige und durch eine Verstellbewegung vorzunehmende Änderung des Werkzeug- Einstechwinkels sämtlicher Werkzeuge des Gerätes. Zu diesem Zwecke ist eine Zentralverstellachse 34 vorgesehen, an der Ausleger 35 verdrehfest angeordnet sind, deren jeder über eine Verbindungsstange 37 mit dem nach oben abragenden Arm 16 des zugehörigen Einstellhebels 12 in Verschwenkverbindung steht. Die Zentralverstellachse 34 ist rahmenfest unterhalb der Verschwenklagerung 3 für die Tragarme 2 in nicht weiter dargestellter Weise rahmenfest gelagert. Es ist ersichtlich, daß bei Verschwenken der Zentralachse über die jeweiligen Ausleger 35 - nur einer gezeigt - und die Verbindungsstangen 37 die Einstellhebel 12 verschwenkbar sind. Es müssen nicht sämtliche Werkzeuge an eine Zentralverschwenkachse angeschlossen sein. Grundsätzlich kann man natürlich auch nur einen oder eben eine Gruppe von Werkzeugträgern gemeinsam und gleichzeitig ausrichten.

Fig. 1 zeigt eine Ausführung mit Zentralverstellachse, bei der diese über einen Hebel 36 verschwenkbar ist, wodurch die Einstechwinkellage bestimmt werden kann. Unabhängig davon läßt sich die Einstechtiefe durch den Spindeltrieb mit der Handkurbel 44 in bereits beschriebener Weise bestimmen.

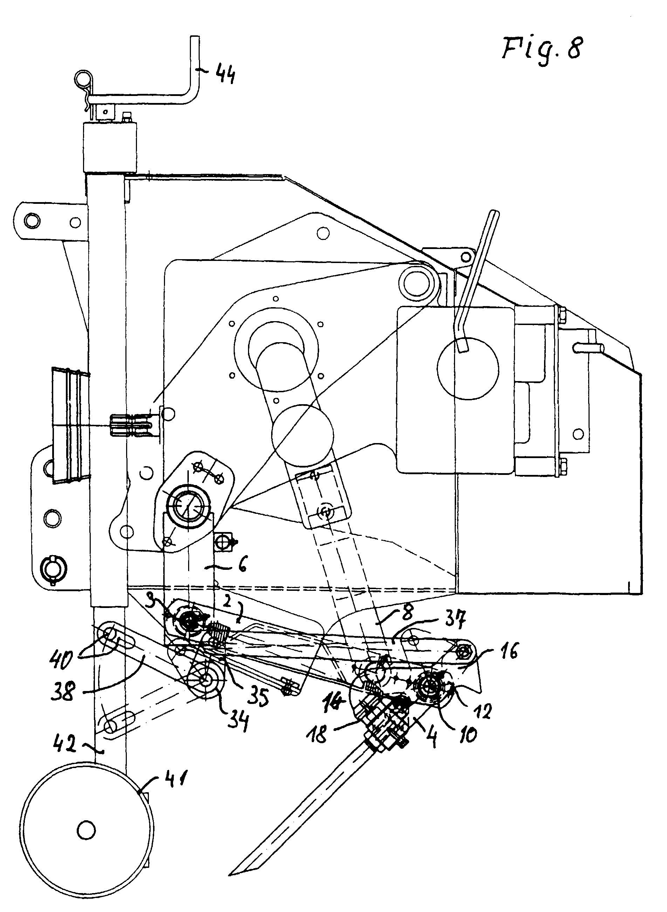

Fig. 8 zeigt ein letztes Ausführungsbeispiel ähnlich demjenigen nach Fig.1, bei dem anstelle des Handhebels 36 ein mit der Zentralverstellachse 34 verdrehfest seitlich abragender Mitnehmer 38 verbunden ist, der über einen Zapfen-Langloch-Eingriff 40 mit dem Stützwalzenträger 42 getrieblich verbunden ist. Auf diese Weise wird eine Verstellung der Werkzeug-Einstechtiefe in den Boden durch Drehen der Handkurbel 44 mit einer Verstellung des Einstechwinkels zwangsgekoppelt und durch einen Einstellvorgang für alle Werkzeuge gleichzeitig möglich, womit einem Zusammenhang zwischen Einstechwinkel und Einstechtiefe zwangsgesteuert Rechnung getragen werden kann.

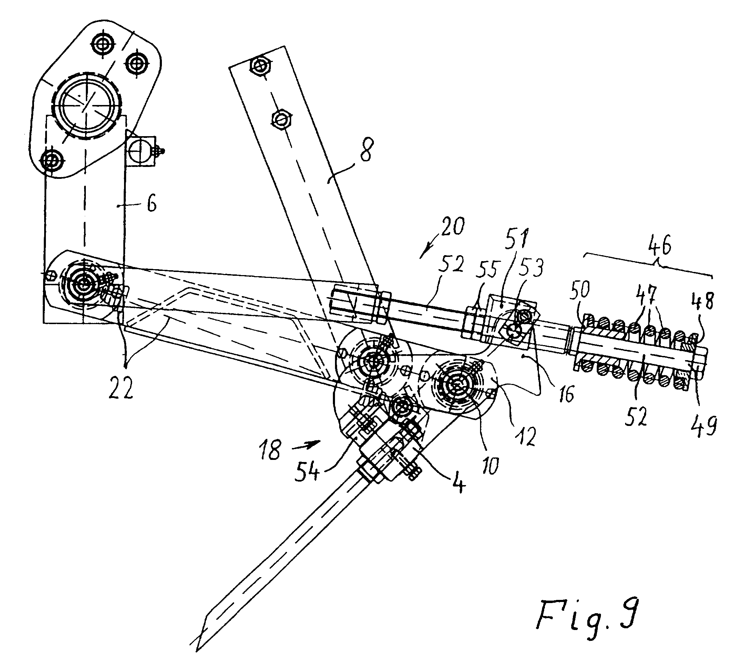

Das weitere Ausführungsbeispiel gemäß Figur 9 lehnt sich in seiner Teilseitenansicht an das in Figur 4 gezeigte Ausführungsbeispiel an, kann aber auch im Zusammenhang mit den anderen Ausführungsbeispielen Anwendung finden. Das Ausführungsbeispiel nach Figur 9 zeichnet sich dadurch aus, daß der nach oben abragende Arm 16 des Einstellhebels 12 nicht starr an die Verstelleinrichtung 20 angeschlossen ist, sondern angekoppelt über eine Dämpfungseinrichtung 46, die in gleicher Beaufschlagungsrichtung wie der Anschlag 18 wirksam ist. Im bevorzugten, dargestellten Ausführungsbeispiel ist die Dämpfungseinrichtung 46 mittels einer Schraubendruckfeder 47 verwirklicht, die einen Endes über einen ersten Federsitz 48 an der nach hinten/außen ragenden, als Schraube 49 ausgebildeten Verstelleinrichtung 20 abgestützt und anderen Endes über einen zweiten Federsitz 50 und ein Gelenkstück 51 an den nach oben ragenden Arm 16 des Einstellhebels 12 angeschlossen ist. Das Gelenkstück 51 und die Druckfeder 47 mir ihren Federsitzen 48 und 50 sind koaxial auf den Schaft 52 der Schraube 49 aufgesetzt und in dessen Achsrichtung verschiebbar gehalten. Das Gelenkstück 51 ist mittels einer aus Kontermuttern bestehende Festlegeeinrichtung 55 an der der Druckfeder 47 abgewandten Seite hinsichtlich dessen Verschiebbarkeit begrenzt, so daß durch Einstellung dieser Begrenzung die Druckfeder 47 vorgespannt werden kann.

Das Gelenkstück 51 ist bei 53 an dem nach oben ragenden Arm 16 des Einstellhebels 12 angelenkt, so daß eine Drehbewegung des Einstellhebels 12 unter Einwirkung der Stechwerkzeuge 4 gegen den Anschlag 18 über den Federsitz 50 auf die Druckfeder 47 übertragen wird, die über den Federsitz 48 an dem Kopf der Einstellschraube 49 abgestützt ist. Die Kraft der Zugfeder 22 ist bei Anliegen des Stechwerkzeuges bzw. des Werkzeughalters 4 an dem Anschlag 18 des Einstellhebels 12 gegen die Kraft der Druckfeder 47 gerichtet. Da die Druckfeder 47 steifer und/oder vorgespannter als die Zugfedereinrichtung 22 ist, läßt sich der Einstechwinkel der Stechwerkzeuge 4 mittels der Einstellschraube 49 exakt und nicht schwimmend einstellen, was prinzipiell bei schwächerer Druckfeder auch möglich wäre.

Der Anschlag 18 ist mit einem Aufschlagdämpfer 54 versehen, der eine andere Dämpfungscharakteristik als die Dämpfungseinrichtung in Gestalt der Druckfeder 47 aufweist, so daß aufgrund der unterschiedlichen Frequenzgänge ein " breites Dämpfungsfrequenzband" gegen die unterschiedlichen Schlagbelastungen des Einstellhebels 12 bereit gestellt wird.

Durch die Dämpfungseinrichtung (Druckfeder 47) wird eine zusätzliche Dämpfung bei betriebsgerechtem Anschlagen der Stechwerkzeuge 4 an den Anschlag 18 des Einstellhebels 12 zur Verfügung gestellt. Des weiteren wird ein Überlastschutz für die Stechwerkzeuge bereitgestellt, wenn beispielsweise bei Rückwärtsfahrt diese gegen einen Stein oder dergleichen Anlaufen oder bei Vorwärtsfahrt ein Eindringen in den Boden behindert ist und die Stechwerkzeuge nach vorn abgleiten. Schließlich ist bei schräg stehenden Stechwerkzeugen ein schnelleres Absenken auf den Boden möglich. Bei all diesen Vorgängen dient die Dämpfungseinrichtung (Druckfeder 47) dem Ausweichen des Werkzeuges und verhindert damit dessen Beschädigung. Insgesamt läßt sich mit dieser Dämpfungseinrichtung eine wesentlich schnellere Arbeitsweise ermöglichen.

## Patentansprüche

1. Fahrbares oder an ein Fahrzeug anzuschließendes Bearbeitungsgerät (1) für die Tiefenlockerung von Böden, beispielsweise unterhalb einer Grasnarbe, mit einer im wesentlichen senkrecht zur Fahrtrichtung verlaufend angeordneten Aufeinanderfolge von Stechwerkzeugen bzw. Werkzeughalter (4), deren jeder in einem der Endbereiche eines Tragarms angelenkt ist, der anderen Endes an einem Geräterahmen (6) verschwenkbar gelagert ist, an dem eine in einer vertikalen und in Fahrtrichtung verlaufenden Ebene wirksame Antriebsstange (8), insbesondere eines Kurbeltriebes, angreift und an dem ein koaxial zur Anlenkachse (10) des Werkzeughalters (4) verschwenkbarer zweiarmiger Einstellhebel (12) gehalten ist, an dessen nach unten abragendem Arm (14) ein auf einen unterhalb der Gelenkachse (10) befindlichem Bereich des Werkzeughalters (4) ausgerichteten Anschlag (18) aufweist und an dessen nach oben abragendem Arm (16) eine Verstelleinrichtung (20) angreift, mit der die Winkelstellung des Einstellhebels (12) zum Tragarm (2) und damit über den Anschlag (18) der Einstechwinkel des Stechwerkzeuges gegenüber dem Boden bestimmbar ist, wobei der Werkzeughalter (4) mittels einer Federeinrichtung (22) in Anlage an den Anschlag (18) beaufschlagt ist und diesen bei Einstich in den Boden durch den dadurch gegen Fahrtrichtung auftretenden Widerstand gegen die Federkraft verläßt.

2. Gerät nach Anspruch 1,
**dadurch gekennzeichnet**,
daß die Federeinrichtung (22) auf Zug beanspruchbar zwischen dem Werkzeughalter (4) und einer zumindest im Nahbereich der rahmenfesten Verschwenklagerung (3) des Tragarmes (2) insbesondere dessen Schwenklagerachse umgreifend gegebenenfalls unter Vorspannung eingesetzt ist.

3. Gerät nach Anspruch 2,
**dadurch gekennzeichnet**,
daß die Federeinrichtung (22) seitlich des insbesondere aus zwei parallelen Streben gebildeten Tragarmes (2) angeordnet ist und vorzugsweise zwei parallel angeordnete Federn umfaßt.

4. Gerät nach einem der Ansprüche 1 bis 3
**dadurch gekennzeichnet**,
daß die Verstelleinrichtung (20) zwischen einer Angriffsstelle an dem nach oben abragendem Arm (16) des Einstellhebels (12) und einer Angriffsstelle im Nahbereich der rahmenfesten Verschwenklagerung, insbesondere an der Schwenklagerachse, angeordnet ist.

5. Gerät nach Anspruch 4,
**dadurch gekennzeichnet**,
daß die Verstelleinrichtung (20) ein zwischen den Angriffsstellen wirksames längenveränderliches Element aufweist, insbesondere ein Spannschraubschloß (24), ein von der der rahmenfesten Verschwenklagerung (3) abgewandten Kopfseite des Tragarmes (2) betätigbares Schraubstellglied (26), eine gleichermaßen betätigbare Knebelverschraubung (28) oder dergleichen.

6. Gerät nach einem der Ansprüche 1 bis 5,
**dadurch gekennzeichnet,**
daß die Verstelleinrichtung (26) eine Zentralverstellachse (34) aufweist, die mittels eines seitlichen Auslegers über ein Einstellgliedteil mit dem nach oben abragenden Arm (16) des Einstellhebels (12) verbunden ist und die insbesondere jeweils mittels zugeordneter Ausleger (35) in vergleichbarer Weise mit sämtlichen Einstellhebeln (12) aller Werkzeughalter (4) in Verbindung steht, wobei die Zentralverstellachse (34) im Nahbereich der Verschwenklager (3) der Tragarme (2), vorzugsweise unterhalb dieser, gestellfest drehgelagert ist.

7. Gerät nach Anspruch 6,
**dadurch gekennzeichnet,**
daß die Zentralverstellachse (34) mittels eines Verstellhebels (36) zur Bestimmung unterschiedlicher Einstechwinkel - insbesondere stufenlos - in entsprechend verschiedene Verschwenkstellungen überführbar und in diesen arritierbar ist.

8. Gerät nach Anspruch 6,
**dadurch gekennzeichnet**,
daß die Zentralverstellachse (34) an eine die Tiefeneinstellung des Stechwerkzeugeingriffs in de Boden bestimmende Versetzeinrichtung angeschlossen ist, insbesondere über einen verdrehfest seitlich abragenden Mitnehmer (38) an der Halterung (42) eines bodenseitiges Stützradpaares oder einer Stützwalze (41) mitnehmend angreift, welche Halterung (42) über einen Spindeltrieb (44) höhenverstellbar an dem Geräterahmen (6) gehalten ist.

9. Gerät nach einem der Ansprüche 1 bis 8,
**dadurch gekennzeichnet**,
daß im Bereich des Anschlages (18) diesen bildend oder zusätzlich zu einem elastisch verformbaren Aufschlagelement ein Stoßdämpfer (30) vorgesehen ist, vorzugsweise am nach unten abragenden Arm (16) des Einstellhebels angeordnet und insbesondere mit einer in Aufschlagrichtung des Werkzeughalters (14) versetzbaren Kolbenstange einer Fluidzylindereinrichtung in staubdichter Ausführung als Stoßabfangelement.

10. Gerät nach einem der Ansprüche 1 bis 9,
**dadurch gekennzeichnet**,
daß im Bereich des nach oben abragenden Armes (16) des Einstellhebels (12) eine Rückschlagsperre (32), insbesondere in Gestalt einer etwa in Tragarmrichtung abstrebenden Nasenausbildung, für das Abfangen des Werkzeugträgers (14), insbesondere bei Brechen der Federeinrichtung oder auch nur einer deren Federn, vorgesehen ist.

11. Gerät nach einem der Ansprüche 1 bis 10,
**dadurch gekennzeichnet**,
daß dem Anschlag (18) eine Dämpfungseinrichtung (46) zugeordnet ist, insbesondere hinsichtlich des Kraftflusses aufeinanderfolgend.

12. Gerät nach Anspruch 11,
**dadurch gekennzeichnet**,
daß die Dämpfungseinrichtung (46) steifer - mit steilerer Kraf-Weg-Charakteristik - ausgebildet ist als die an den Stechwerkzeugen (4) angreifende Federeinrichtung (22), wobei die Dämpfungseinrichtung (46) vorzugsweise vorgespannt betrieben ist.

13. Gerät nach Anspruch 11 oder 12,
**dadurch gekennzeichnet**,
daß die Dämpfungseinrichtung (46) an dem nach oben ragenden Arm (16) des Einstellhebels (12) im Bereich der Verstelleinrichtung (20) angeordnet ist.

14. Gerät nach Anspruch 13,
**dadurch gekennzeichnet**,
daß die Dämpfungseinrichtung (46) als Druckfeder, insbesondere als Schraubendruckfeder (47), ausgebildet ist, die mit Federsitzen (48, 50) koaxial zum Schaft (52) einer als Verstelleinrichtung (20) ausgebildeten Einstellschraube (49) auf diesem angeordnet ist, und daß der nach oben ragende Arm (16) des Einstellhebels (12) an ein an dem Schaft (52) längsbeweglich gelagerten Gelenkstück (51) angelenkt ist, wobei das Gelenkstück (51) an dem Schaft (52) hinsichtlich seiner Verschiebebewegung gegen die Kraft der Druckfeder (47) gegebenenfalls unter deren Vorspannung mittels einer Festlegeeinrichtung (55) begrenzbar ist.

15. Gerät nach einem der Ansprüche 11 bis 14,
**dadurch gekennzeichnet**,
daß der Anschlag (18) einen Aufschlagdämpfer (54) aufweist, dessen Dämpfungscharakteristik von derjenigen der Dämpfungseinrichtung (46) abweichend ausgebildet ist.

## Claims

1. A self-propelled or vehicle-attached processing machine (1) for the loosening of earth, for example under turf, with a series of piercing tools or tool holders (4) disposed substantially perpendicular to the direction of travel, each one of which is pivoted in one of the end areas of a supporting arm, the other end being swivellably mounted on a machine frame (6), on which a drive rod (8), especially of a crank drive, which acts in a vertical plane extending in the direction of travel engages and on which a two-armed adjusting lever (12), pivotable coaxial to the axis of articulation (10) of the tool holder (4), is mounted, the downwardly-projecting arm (14) of which has a detent (18) aligned on an area of the tool holder (4) disposed underneath the axis of articulation (10) and on the upwardly-projecting arm (16) of which an adjustment mechanism (20) engages, via which the angular setting of the adjustment lever (12) to the supporting arm (2) and hence, via the detent (18), the insertion angle of the piercing tool with regard to the ground can be set, wherein the tool holder (4) is acted upon by a spring apparatus (22) in its position of contact with the detent (18), leaving this against the spring resilience when inserted into the ground as a result of the resistance occurring against the direction of travel.

2. A device according to claim 1, characterised in that the spring apparatus (22) can be subjected to tensile loading between the tool holder (4) and a fixing point, embracing at least in the vicinity of the frame-fixed swivelling mounting (3) of the supporting arm (2), especially its swivelling mount axis, optionally under pre-tension.

3. A device according to claim 2, characterised in that the spring apparatus (22) is disposed laterally to the supporting arm (2) which is especially configured of two parallel stanchions and preferably comprises two springs disposed in parallel.

4. A device according to one of claims 1 to 3, characterised in that the adjustment mechanism (20) is disposed between a point of contact on the upwardly-projecting arm (16) of the adjustment lever (12) and a point of contact adjacent to the frame-fixed swivelling mounting, especially on its swivelling mount axis.

5. A device according to claim 4, characterised in that the adjustment mechanism (20) has a length-altering element which is effective between the points of contact, especially a tie bar (24), a screw adjuster (26) which can be operated from the head-side of the supporting arm (2) remote from the frame-fixed swivelling mounting (3), a similarly-operated tommy-screw (28) or similar.

6. A device according to one of claims 1 to 5, characterised in that the adjustment mechanism (26) has a central adjustment axle (34) which, by means of a lateral bracket, is connected with the upwardly-projecting arm (16) of the adjustment lever (12) via an adjustment member and which is especially connected to all adjustment levers (12) of all tool holders (4) by means of assigned brackets (35), wherein the central adjustment axle (34) is fixed to the frame in a swivellable manner, adjacent to the swivelling mounts (3) of the supporting arms (2), preferably below these.

7. A device according to claim 6, characterised in that the central adjustment axle (34) can be moved by means of an adjustment lever (36) into correspondingly-different swivel positions - especially progressively - and can be locked in these positions, in order to set different insertion angles.

8. A device according to claim 6, characterised in that the central adjustment axle (34) is attached to an off-set apparatus which determines the depth setting of the piercing tool into the ground, especially engaging with the mounting (42) of a ground-side pair of stabiliser wheels or a stabiliser roller (41) in a carrying manner via a carrier (38) which projects laterally in a torsionally-rigid manner, the mounting (42) being held on the machine frame (6) in a height-adjustable manner by means of a spindle drive (44).

9. A device according to one of claims 1 to 8, characterised in that a shock absorber (30) is provided in the area of the detent (18), forming this or in addition to an elastically-deformable impact element, the shock absorber being preferably disposed on the downwardly-projecting arm (16) of the adjustment lever and especially with a piston rod of a dust-proof fluid cylinder apparatus as a shock buffer mechanism, the piston rod being moveable in the impact direction of the tool holder (14).

10. A device according to one of claims 1 to 9, characterised in that a recoil block (32) is disposed in the area of the upwardly-projecting arm (16) of the adjustment lever (12), especially shaped approximately as a nose formation facing downwards towards the supporting arm assembly, to catch the tool carrier (14) especially in the event that the spring apparatus, or just one of its springs, fails.

11. A device according to one of claims 1 to 10, characterised in that a damping mechanism (46) is allocated to the detent (18), especially subsequently with regard to the flow of force.

12. A device according to claim 11, characterised in that the damping mechanism (46) is configured more stiffly - with steeper force/travel characteristics - than the spring assembly (22) which acts upon the piercing tools (4), wherein the damping mechanism (46) is preferably pre-tensioned when used.

13. A device according to claim 11 or 12, characterised in that the damping mechanism (46) is disposed on the upwardly-projecting arm of the adjustment lever (16) in the area of the adjustment mechanism (20).

14. A device according to claim 13, characterised in that the damping mechanism (46) is configured as a compression spring, especially a helical compression spring (47) which is arranged with spring seats (48, 50) coaxial to the shaft (52) of a setting screw (49) configured as an adjustment mechanism (20), and that the upwardly-projecting arm (16) of the adjustment lever (12) is pivoted on a connecting piece (51) which is mounted so as to be moveable in the longitudinal direction on the shaft (52), wherein the connecting piece (51) can be limited with regard to its displacement movement on the shaft (52) against the force of the compression spring (47), optionally by pretensioning this via a clamping mechanism (55).

15. A device according to one of claims 11 to 14, characterised in that the detent (18) has an impact damper (54), the damping characteristics of which are configured so as to deviate from those of the damping mechanism (46).

## Revendications

1. Appareil (1) pour le travail du sol, automoteur ou relié à un véhicule, pour ameublir les sols en profondeur, par exemple sous une nappe de gazon, comportant une succession d'outils à enfoncer ou de porte-outils (4) se suivant essentiellement dans la direction perpendiculaire à la direction de déplacement, dont chacun d'eux est articulé à une extrémité d'un bras de support dont l'autre extrémité est montée pivotante sur un châssis (6) de l'appareil, à laquelle est reliée une bielle (8) agissant dans un plan vertical dans la direction de déplacement, appartenant notamment à un entraînement à manivelle, et qui porte coaxialement à l'axe d'articulation (10) du porte-outil (4), un levier de réglage 12 à deux bras, pivotant, dont le bras (14) dépassant vers le bas comporte une butée (18) dirigée vers une zone du porte-outil (4) se trouvant en dessous de l'axe d'articulation (10), et dont le bras (16) dépassant vers le haut est relié à une installation de réglage (20) qui permet de régler l'angle du levier de réglage (12) par rapport au bras de support (2), et ainsi par la butée (18), l'angle d'enfoncement de l'outil par rapport au sol, le porte-outil (4) étant sollicité par une installation à ressort (22) en appui contre la butée (18), tandis qu'il s'écarte de la butée contre la force du ressort lors de son enfoncement dans le sol, à cause de la résistance produite dans la direction opposée à la direction de déplacement,

2. Appareil selon la revendication 1,
caractérisé en ce que
l'installation à ressort (22) réagissant à la traction est montée entre la porte-outil (4) et un point d'attaque, qui est situé au moins dans zone proche du palier de basculement (3)du bras de support (2) fixé au châssis, notamment entourant son axe de basculement le cas échéant avec précontrainte.

3. Appareil selon la revendication 2,
caractérisé en ce que
l'installation à ressort (22) est prévue à côté du bras de support (2) notamment formé de deux entretoises parallèles, et comprend de préférence deux ressorts montés en parallèle.

4. Appareil selon l'une quelconque des revendications 1 à 3,
caractérisé en ce que
l'installation de réglage (20) est prévue entre un point d'attache sur le bras (16) dépassant vers le haut du levier de réglage (12) et un point d'attache dans la zone proche du palier de basculement solidaire du châssis, notamment de l'axe de basculement.

5. Appareil selon la revendication 4,
caractérisé en ce que
l'installation de réglage (20) comprend un élément de longueur variable agissant entre les points d'attache, notamment un tirant à vis (24), un organe de réglage à vis (26) qui peut s'actionner à partir de la tête du bras de support (2) à l'opposé du palier de basculement (3) solidaire du châssis, une liaison à vis et une installation à vis (28) susceptible d'être actionné de la même manière ou d'un moyen analogue.

6. Appareil selon l'une quelconque des revendications 1 à 5,
caractérisé en ce que
l'installation de réglage (20) comporte un axe de réglage central (34) relié par un maneton latéral et par une pièce de réglage, au bras (16) en saillie vers le haut du levier de réglage (12), et qui coopère notamment chaque fois à l'aide d'un maneton (35) associé, de manière comparable avec tous les leviers de réglage (12) de tous les porte-outils (4), l'axe de réglage central (34) étant monté à rotation de manière fixe dans la zone proche du palier de basculement (3) des bras de support (2) de préférence en dessous de ceux-ci.

7. Appareil selon la revendication 6,
caractérisé en ce que
l'axe de réglage central (34) peut être mis dans des positions de basculement différentes et être bloqué dans celles-ci par un levier d'actionnement (36) pour définir un angle d'enfoncement différent, notamment de manière continue.

8. Appareil selon la revendication 6,
caractérisé en ce que
l'axe de réglage central (34) est relié à une installation de déplacement qui définit le réglage en profondeur de l'action des outils dans le sol, notamment est en prise par un organe d'entraînement (38), en saillie, latéralement, solidaire en rotation en coopérant avec le support (42) d'une paire de roues d'appui sur le sol ou d'un cylindre d'appui (41), ce support (42) étant tenu au châssis (6) de l'appareil, de manière réglable en hauteur par un entraînement à broches (44).

9. Appareil selon l'une quelconque des revendications 1 à 8,
caractérisé en ce qu'
au niveau de la butée (18), il est prévu un amortisseur (30) qui forme cette butée ou en plus d'un élément de butée déformable élastiquement, prévu de préférence sur le bras (16) dirigé vers le bas du levier de réglage, et notamment une tige de piston susceptible d'être mise dans la direction d'appui du porte-outil (14) et appartenant à une installation à cylindres à fluide, dans une réalisation étanche à la poussière comme élément amortisseur.

10. Appareil selon l'une quelconque des revendications 1 à 9,
caractérisé en ce qu'
au niveau du bras (16) en saillie vers le haut du levier de réglage (12), il est prévu un verrou anti-retour (32), notamment sous la forme d'un bec en saillie dans la direction du bras de support pour recevoir le porte-outil (14), notamment en cas de rupture de l'installation à ressort ou seulement de l'un des ressorts de cette installation.

11. Appareil selon l'une quelconque des revendications 1 à 10,
caractérisé par
une installation d'amortissement (46) associée à la butée (18), notamment dans la suite du flux des efforts.

12. Appareil selon la revendication 11,
caractérisé en ce que
l'installation d'amortissement (46) est plus rigide (avec une caractéristique plus raide force/course) que l'installation de ressort (22) agissant sur les outils (4), l'installation d'amortissement (46) étant de préférence précontrainte.

13. Appareil selon l'une des revendications 11 ou 12,
caractérisé en ce que
l'installation d'amortissement (46) est prévue sur le bras (16) en saillie vers le haut du levier de réglage (12) au niveau de l'installation de réglage (20).

14. Appareil selon la revendication 13,
caractérisé en ce que
• l'installation d'amortissement (46) est un ressort de compression, notamment un ressort de compression (47) hélicoïdal, monté sur une vis de réglage (49) avec des sièges de ressort (48, 50) coaxialement à la tige (52) de la vis de réglage constituant l'installation de réglage (20), et le bras (16) dirigé vers le haut du levier de réglage (12) est articulé sur une pièce d'articulation (51) mobile longitudinalement par rapport à la tige (52),
• la pièce d'articulation (51) étant limitée dans son mouvement de translation sur la tige (52) par la force développée par le ressort de compression (47), le cas échéant avec précontrainte par l'intermédiaire d'une installation de blocage (55).

15. Appareil selon l'une quelconque des revendications 11 à 14,
caractérisé en ce que
la butée (18) comporte un amortisseur (54) dont la caractéristique d'amortissement est différente de celle de l'installation d'amortissement (46).
